# EUROPEAN PATENT SPECIFICATION

(11) **EP 1 791 693 B1**
(45) Date of publication and mention of the grant of the patent: **27.06.2012**
(21) Application number: 05794287.2
(22) Date of filing: 06.09.2005
(51) Int. Cl.: B32B 15/01, C22C 9/02, C25D 5/10, C22C 13/00, C23C 28/02, C23C 30/00, C25D 7/00

(54) **ELECTROPLATED METALS WITH SILVERY-WHITE APPEARANCE AND METHOD OF MAKING**
GALVANISIERTE METALLE VON SILBRIGWEISSEM AUSSEHEN UND HERSTELLUNGSVERFAHREN DAFÜR
METAUX DEPOSES PAR ELECTRODEPOSITION PRESENTANT UN ASPECT BLANC ARGENTE ET PROCEDE DE PRODUCTION

(30) Priority: 24.09.2004 US 950242; 22.07.2005 US 187046
(43) Date of publication of application: 06.06.2007
(73) Proprietor: Jarden Zinc Products, LLC, Greenville, TN 37745 (US)
(72) Inventor: MCDANIEL, Paul, Jonesborough, TN 37659 (US); SMELCER, Johnny, Midway, TN 37809 (US); BEETS, Randy, Bulls Gap, TN 37711 (US)
(74) Representative: Holmes, Matthew Peter
(86) International application number: PCT/US2005/031735
(87) International publication number: WO 2006/036479

(56) References cited:
- EP-A- 0 808 921
- EP-A- 1 533 397
- WO-A2-2004/035875
- DE-A1- 3 940 244
- JP-A- 10 102 278
- JP-A- 10 102 278
- JP-A- 2004 010 907
- US-A- 2 511 395
- US-A- 2 658 032
- US-A- 2 658 032
- US-A- 4 565 608
- US-A- 4 579 761
- US-A- 4 579 761
- US-A- 5 972 526
- US-B1- 6 416 571
- US-B1- 6 416 571

## Description

### Background of the Invention

This invention relates to coins having a silvery-white appearance and, In particular to such coins produced by electroplating processes.

Nickel is used for a variety of different coinage, tokens, and medallions. More specifically, coinage, tokens, and medallions are often made with cupronickel, nickel brass, and nickel-plated steel. Cupronickel is also known as copper alloy C713, and contains 23.5% to 26.5% nickel by weight, with the balance of the composition comprising copper. One characteristic of nickel is its silvery-white appearance which is recognizable in distinguishing the nickel-based coinage, tokens, and medallions from other coinage, tokens, and medallions.

Many people have an allergy to nickel metals. Allergic reactions to nickel are not only a problem for consumers handling nickel-based objects, but are particularly a problem for persons, such as cashiers and tellers, who handle lots of coins, and for persons involved in the manufacture of such objects. Thus, it is desired to provide coinage tokens, and medallions that do not expose such persons to nickel metals when in contact with the coinage, tokens, or medallions. Yet, if it is desired to modify coins, tokens, or medallions to eliminate contact to nickel metals, it is still desired to retain the silvery-white appearance for recognition and distinguishing purposes. For example, it is desired that any replacement for the 5 cent coin in the United States, known as the "nickel", should have substantially the same appearance as the present-day "nickel".

Present technology used to produce silvery-white coins, tokens, and medallions include: (1) A corrosion-resistant white metal alloy (stainless steel, nickel alloy, cupronickel, etc.); (2) A clad material with a corrosion-resistant white metal alloy bonded to a base metal core; and (3) Electroplated nickel over a base metal core (usually steel), often with one or more plated layers beneath the nickel. On steel, a total minimum plating thickness of 25 µm is usually specified, due to corrosion concerns. After plating, nickel-plated blanks must be baked to relieve the stresses in the plating, which would otherwise lead to cracking during the coining process. The oxides formed during this baking process must be removed by burnishing the blanks. In all three processes, the finished blank is capable of inducing contact dermatitis In any individual who is sensitized to nickel, unless the surface alloy contains no nickel.

In addition to maintenance of appearance, there are several other characteristics and properties required of coinage, tokens, and medallions. Over long usage, the coinage, token, or medallion must maintain its color, and be tarnish-resistant, durable, and attractive. The coinage, token, or medallion must stand up to the wear and tear of its intended usage and handling. Weight of the coinage, token or medallion is also a concern, particularly when used in automatic machines. For example, vending machines accepting coinage are often weight sensitive, as are machines accepting subway tokens.

It is also desired that any coinage, token, or medallion that does not expose a handler to any nickel metal also be comprised of materials and made by processes that are near or less the cost of materials and manufacture of present coinage, tokens, and medallions. No change in appearance should result in the finished product, and, therefore, such coinage, tokens, and medallions need to be able to be converted from a blank to a finished product using standard production techniques. Stated another way, the object must be fabricable into the end product and have sufficient ductility to enable it to be struck or minted into the finished product.

It is further desired to develop coinage, tokens, and medallions that are comprised of inexpensive metals - at least in part. For coinage, in particular, it is generally desired that the cost of the metal(s) and production for a coin be low relative to the face value of the coin. The less expensive the coin is to produce, the greater seigniorage is gained by the minting process. Further, if the value of the metal(s) of the coin exceeds the face value, the issuing entity will likely be forced to change the size or makeup of the coin to lower the value of the metal(s) in the coin so that the public will not sell the coins for the value of the metal(s). Consider, for example, the coin of U.S. Patent No. 6,383,657 that has a silver appearance but does not utilize a silver core or silver cladding layers. Instead, aluminum and zinc are used to produce a coin having a silver appearance. Aluminum and zinc are both significantly less expensive materials than is silver.

Various efforts have been made in the past to make coinage, tokens, or medallions from alternate materials. For example, the invention of U.S. Patent No. 5,151,167 comprises a coin including a blank electroplated with nickel, followed by an electroplated copper layer, and a final electroplated nickel layer. The invention of U.S. Patent No. 5,151,167 does not require the use of nickel as the core of the coin, but, it results in a coin having nickel metals to which persons would be exposed. Thus, such a coin does not address the issue of nickel allergies. Also, the manufacture of the coin of U.S. Patent No. 5,151,167 involves three electroplating processes to result in the "nickel" coin, and Is therefore expensive to perform.

Several methods have been developed to produce coins having a golden color. For example, U.S. Patent No. 4,579,761 describes production of coins having a gold appearance by using yellow bronze. The yellow bronze of U.S. Patent No. 4,579.761 contains 8% to 18% by weight of tin, with the balance as copper. Similarly, U.S. Patent No. 6,432,556 discloses production of a coin having a golden appearance. The coin includes two cladding layers. The first cladding layer contains 6% to 12% manganese and 6% to 25% zinc, while the second cladding layer contains 7% to 10% manganese and 10% to 15% zinc. U.S. Patent No. 8,432,556 also suggests that the cladding layers might contain nickel, and could contain small traces of other metals, such as tin. These patents teach one skilled in the art to produce coins having a gold appearance - not a silvery-white appearance as results in the use of nickel.

Other objects made with a metallic core and for which a silvery-white appearance is desired are also candidates for an alternate finish. Such objects include keys and other small, non-nesting parts. It is therefore desired to produce such objects using materials and methods that avoid the shortcomings set forth hereinabove.

### Summary

The present invention provides a coin, comprising: a metallic core having external surfaces; a first electroplated layer adhered to and encasing the external surfaces of the metallic core, the first electroplated layer of from 4 µm to 25 µm in thickness and comprising from 60% by weight of copper to 100% by weight of copper; and a second electroplated layer of white bronze adhered to and encasing the first electroplated layer, the second electroplated layer of from 4 µm to 25 µm in thickness and consisting of from 70% by weight of copper and 30% by weight of tin to 10% by weight of copper and 90% by weight of tin.

The resulting coin has a silvery-white appearance, such as Is the conventional appearance of nickel and its alloys. However, the coin does not contain any nickel in the second layer, so that persons having an allergy to nickel will not be affected by such allergy when handling the composite material. Further, the resulting product will maintain its color, and is tarnish-resistant, durable, and attractive.

According to one method of manufacturing the coin, a metallic core, a first plating bath, and a second plating bath are provided. The metallic core is electroplated using the first bath to result in a first layer adhered to and encasing the metallic core. The combination of the metallic core and the first layer are electroplated using the second bath to result in a second layer adhered to and encasing the first layer. The resulting first layer comprises copper or copper alloy. The resulting second layer comprises white bronze alloy.

The method may include additional steps to remove materials that may be considered "contaminants" for the ensuing step. For example, prior to electroplating the first layer, the method may include acid dips, "zincate" immersion deposit, or cleaning and rinsing to remove dirt or oil that may be present on the metallic core, or to remove other contaminants from the metallic core, or otherwise prepare the metallic core to receive an adherent electrodeposit. The method may also include the step of rinsing or cleaning to remove any residue resulting from the first plating bath. The method may further include, after the step of electroplating the second layer, the step of rinsing or cleaning to remove any residual second bath plating solution from the step of electroplating the second layer. The term "contaminants" refers to any material (liquid or solid) that may be detrimental to the next step, and thus includes dirt, oil, and residues remaining from step(s) performed prior to the removal of the contaminants, as well as steps taken to prepare for receipt of an adherent electrodeposit in the next step(s).

The method may also include the step of a "strike" prior to the step of electroplating the first layer onto the metallic core. Such striking scrubs the metal surfaces of the metallic core and usually applies a thin, protective layer of metal, such as copper or nickel, to ensure good adhesion of the first electroplated layer. Generally, this thin, protective layer is from about 0.1 µm to about 1.0 µm.

After the second layer is electroplated, post-plating steps may be taken to further ensure that the blank (the combination of the metallic core with the first and second layers adhered thereto) can be fashioned into the desired finished product using conventional techniques. This post-plating may include stress relief as is well known in the art. Further, the blanks may be burnished if a bright silvery-white finish is desired. Thus, the blanks of the present invention are suitable to be fashioned into coinage, tokens, and medallions having a silvery-white finish, such as usually accomplished with a nickel-based finish.

The present invention is a coin that does not contain any nickel on the outside surfaces thereof. Thus, the blank is suitable for production of coinage, tokens, and medallions that avoid subjecting consumers, users, cashiers, tellers, and those Involved in the manufacturing process to contact with any nickel to which such persons may be allergic. A variety of sizes and types of metallic core materials may be used, and thicknesses of the metallic core, first layer, and second layer may be varied over a wide range to permit the present invention to produce new types of coinage, tokens, and medallions, as well as to produce coinage, tokens, and medallions intended to replace those that expose persons to nickel. The weight of coinage, tokens, and medallions of the present invention may also be controlled for acceptance by weight sensitive machines, such as vending machines and machines accepting subway tokens.

The method for producing coins according to the invention does not involve many steps, and uses technology known in the art to manufacturers of blanks for coinage, tokens, and medallions, in addition, the materials and processes used to create such coins are not expensive. Resulting coinage, tokens, and medallions can be made according to the present invention keeping the value of the metals in the coinage, tokens, and medallions below the value of the coinage, token, and medallion. For keys and other non-nesting parts that do not have a face value, the value in the metals in such keys and other non-nesting parts can be kept within commercially reasonable bounds. Further, blanks made according to the present invention may be processed into finished product using conventional techniques, such as stamping in a die, and therefore does not require that mints or other manufacturers, that make coinage, tokens, or medallions from such blanks change its processes or make any additional investment.

### Brief Description of the Drawings

Fig. 1 shows a cross-sectional view of one embodiment of a coin blank of the present invention: and
Fig. 2 shows a perspective view of the coin blank of the embodiment of Fig 1.

### Detailed Description

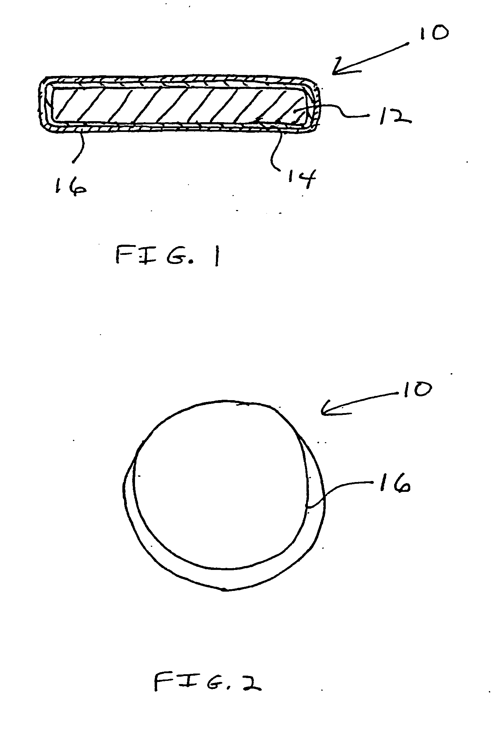

Referring now to Fig. 1 and to Fig. 2, there is shown a cross-sectional view and perspective view, respectively, of one embodiment of a coin blank of the present invention. In this embodiment, coin blank 10 comprises core 12, first electroplated layer 14, and second electroplated layer 16. Core 12 comprises a metal or metal alloy to which copper and copper alloys may be electroplated. Including but not limited to zinc, nickel, iron, copper, and aluminum, and any of their alloys, as well as any other metal or alloy that may be reasonably utilized in coinage, tokens, medallions, and the like. First electroplated layer 14 comprises copper or a copper alloy. First electroplated layer 14. is created, as disclosed herein, from a plating bath containing copper ions, and, first electroplated layer 14 comprises from about 60% to about 100% by weight of copper. Second electroplated layer 16 comprises white bronze. The white bronze layer 16 is created from a bath that contains copper ions and tin ions, and, white bronze layer 16 comprises from about 70% by weight of copper and about 30% by weight of tin to about 10% by weight of copper and about 90% by weight of tin.

It will be appreciated by those of skill of the art that a coin blank having the composition illustrated in association with Fig. 1 and Fig. 2 will have a silvery-white appearance. It will also be appreciated that coin blank 10 may also comprise a blank used to produce a token or medallion. Coin blank 10 is illustrated as a round plate, but coin blank 10 need not be round. Other shapes are contemplated to be within the scope of the invention, including but not limited to elliptical, triangular, rectangular, square, five or more sided, or an Irregular shape. It will be further appreciated that core 12 of coin blank 10 is comprised of a non-precious metal, reasonable in cost, so as to not result in an item (coin, token, or medallion) having a value greater than the face value of the item.

Consider now one embodiment of a method for producing a coin, token, or medallion according to the present invention. Generally, the method comprises the steps of producing/forming a metal blank (planchet) for the coin, token, or medallion, electroplating the planchet with a layer of copper, and then electroplating the copper layer with a layer of white bronze, an alloy of copper and tin. The blank plated with both the copper layer and the white bronze layer may then be "coined" into its final configuration (coin, token, medallion, or similar item) using a die or other methods well known in the art.

According to the present invention, the starting material, or substrate, comprises a metal planchet in the approximate shape and size of the coin, token, or medallion to be manufactured. In one embodiment, the metal planchet comprises a plate of thickness from about 500 µm to about 4,000 µm. A quantity of the planchets is then loaded into a plating barrel or onto a plating rack. The barrel or rack is then processed through a series of cleaners and rinses capable of removing any contaminants, such as dirt or oil, that may be present on the planchets. It will be appreciated that, depending upon the metal selected as the starting material, additional processing steps, such as acid dips or, in the case of aluminum, a "zincate" immersion deposit, may be required or desired to remove contaminants from the planchets (the cores) or otherwise prepare the planchets to receive an adherent electrodeposit.

After removal of contaminants from the planchets, the next step is a "strike", which scrubs the metal surfaces with hydrogen bubbles and simultaneously deposits a thin, protective layer (0.1 - 1.0 µm) of metal, usually copper, to ensure good adhesion of the first electroplated layer, as is discussed in further detail herein. Other metal strikes, predominantly nickel, may also be used in certain applications to ensure good adhesion to certain difficult-to-plate starting metals.

After the strike has been applied to the planchets, the barrel or rack is then moved into a copper plating bath. If an alkaline cyanide copper strike is used, the barrel or rack may be moved directly into an alkaline cyanide copper plating bath. However, if the contents of the strike and plating bath are chemically incompatible (e.g. cyanide copper strike followed by acid copper plating), thorough rinsing must take place before the planchets are moved into the copper plating bath.

Once In the copper plating bath, the planchets are electroplated until the desired plating thickness is reached, i.e., the first electroplated layer is of the desired thickness. Generally, such desired thickness will be from about 4 µm to about 18 µm. Greater thicknesses, for example up to 25 µm are acceptable, provided that the combination of the starting metal planchets and the first electroplated layer does not result in units too large to fit into the die used for the desired production of the coinage, tokens, or medallions.

The first layer comprises copper or copper alloy. Examples of copper alloy include, but are not limited to yellow bronze or brass. An example of a yellow bronze first layer has from about 75% to about 99% by weight of copper and from about 23% to about 1% by weight of tin. An example of a brass first layer has from about 60% to about 99% by weight of copper, and from about 40% to about 1% by weight of zinc.

To create a first layer comprising copper or copper alloy, the first bath comprises copper ions. In one embodiment, the first plating bath may also comprise second metal ions or third metal ions. In addition, as is known in the art, the first plating bath may include complexing agents for the metal ions as well as other additives such as may be necessary to achieve satisfactory deposit of the metal ions, One example of a first plating bath comprises:

| **Description of "Ingredient"** | **Molar Concentration** |
|---|---|
| Copper Ions | 0.98 M |
| Cyanide ions to complex the copper Ions | 2.94 M |
| "Free" cyanide ions to prevent anode polarization and "immersion" deposition of copper | 0.23M |
| Hydroxyl ions to keep PH in proper range | 0.47 M |
| Tartrate Ions to promote the dissolution of copper anodes | 0.16 M |

In using such first plating bath, to achieve a wide range of plating thicknesses, the plating conditions involve use of a barrel process, with a temperature of 120 - 180°F, and a current density of 3 - 10 amperes/ft².

After the copper plating cycle is complete, i.e., after the first electroplated layer is electroplated to the planchets, the barrel or rack is then moved through a series of rinses to remove any residual copper plating solution. The barrel or rack Is then placed into a white bronze (speculum) plating bath. This white bronze plating bath deposits a binary alloy of copper and tin onto the first electroplated layer to form the second electroplated layer of white bronze. According to the present invention, the composition of the second layer of white bronze ranges from about 70% by weight of copper and about 30% by weight of tin to about 10% by weight of copper and about 90% by weight of tin.

The actual composition of the second electroplated layer is controlled by maintenance of the relative concentrations of copper, tin, cyanide, and hydroxide in the plating bath, as is well known in the art. Generally, copper and tin are supplied to the bath by anodic dissolution and/or chemical additions. Inert anodes and multiple rectifiers may be used, as is well known in the art, to ensure that the bath equilibrium is maintained.

Thus, to create the second layer comprising white bronze alloy, the second bath comprises copper ions and tin ions. In one embodiment, the second plating bath may also comprise metal ions in addition to copper and tin ions. In addition, as is known in the art, the second plating bath may include complexing agents for the metal ions as well as other additives such as may be necessary to achieve satisfactory deposit of the metal ions. One example of a second plating bath comprises:

| **Description of "Ingredient"** | **Molar Concentration** |
|---|---|
| Copper Ions | 0.22 M |
| Cyanide ions to complex the copper ions | 0.66 M |
| Tin Ion | 0.39 M |
| Hydroxyl ions to complex the tin ions | 2.34 M |
| "Free" cyanide and hydroxyl ions to | 0.31 M Cyanide |
| maintain the desired plating composition | 0.25 M Hydroxyl |
| Tartrate ions to promote the dissolution of copper anodes | 0.13 M |

Concentrations can vary over a wide range. Perhaps, the ratio of "free" cyanide ion to "free" hydroxide ions Is the most important control parameter. In using such second plating bath, to achieve a wide range of plating thicknesses, the plating conditions involve use of a barrel process, with a temperature of 60°C - 71°C (140 - 160°F), a current density of 0.3 - 1 amp/m² (3 - 10 amperes/ft²), anodes of copper and carbon (independent rectifiers), and a tin source of potassium stannate.

It may be desired that the white bronze layer is deposited to a thickness less than or equal to that of the underlying copper deposit However, the general limitation on the thickness of the starting metal, the first electroplated layer, and the second electroplated layer should be such that the coinage, token, or medallion can be "coined" into the final product with the appropriate thickness. Further, the thickness of the white bronze layer should be at least as great as 4 µm so that the second white bronze layer remains intact with normal wear and tear of the product.

The general practice for steel blanks for coinage has been to have a total-thickness of 25 µm for the layer or layers deposited on the core. Thus, for coinage applications, it may be desired that the total thickness of the first and second layers be 25 µm or greater. The upper limit on any layer or the combination of the first and second layers will also be affected by the desired thickness of the finished product.

After the white bronze plating cycle is complete, the barrel or rack is moved through a series of rinses to remove the residual plating solution, as is well known in the art. Also, as is well known in the art, anti-staining agents may be applied to the white bronze layer. The planchets having the first and second electroplated layers adhered thereto are then dried and collected for subsequent processing.

Depending upon the white bronze alloy plated and the nature of the substrate material, a post-plating stress relief process may be required or desired to ensure good "coinability", i.e., to ensure that the coated blank is able to be fashioned into the desired finished product. Usually, the blanks are burnished to produce a bright silvery-white finish; in some instances, the as-plated brightness may be sufficient. Finally, the blanks are "coined" into their finished appearance using conventional coining dies and presses as is well known in the art.

With white bronze plating, baking to relieve stresses is not required on a steel substrate. The burnishing process, if necessary, need not be as aggressive, because there are no oxides to be removed. If zinc is used as a starting material, the total plating thickness of the coinage, token, or medallion may be as low as about 8 µm, which greatly reduces the required plating time, and also extends significantly the coining die life. Regardless of the substrate metal, the white bronze finish provides a non-allergenic surface. This is especially important for people whose jobs require them to handle large quantities of coins.

It will be appreciated by those of skill in the art that the present invention provides a new product - potentially totally nickel-free white coins, tokens, and medallions capable of withstanding the "coining" process on a variety of substrates. In particular, this enables the production of zinc-based coins with a corrosion and wear-resistant white finish. Zinc may be desired as a substrate material due to its prevalence and reasonable cost. Until the present invention, the only viable finishes for zinc-based coinage, tokens, or medallions were copper and yellow bronze. It is also possible to use nickel as the substrate, starting material, of the present invention. While coinage, tokens, or medallions of the present invention made with a nickel substrate are not nickel-free, handlers of such objects would not be exposed to the underlying nickel once covered by the first electroplated layer.

It will also be appreciated by those of skill in the art that the present invention permits for development of coinage, tokens, and medallions having the desired weight. The flexibility in weight results from the ability to use different substrate materials, and the flexibility in the thickness of the first and second electroplating layers.

It will be further appreciated that the coated blanks of the present invention may be "coined" using processes presently used to produce coinage, tokens, and medallions. The object may be fabricated into the finished product and has sufficient ductility to enable it to be struck or minted. Thus, no additional investment is required for manufacture in that regard. It will be yet further appreciated that the electroplating processes used to create the first and second electroplated layers are also industry standard, and therefore familiar to the manufacturer.

As used in the claims, the term "coin" refers to coinage, tokens, medallions, and other products typically comprised of metals and metal alloys onto the face of which one or more insignias, designs, and the like are formed by metal making processes on the outer layer of the metal or metal alloy.

This application is intended to cover such departures from the present disclosure as come within known or customary practice in the art to which this invention pertains and which fall within the limits of the appended claims.

## Claims

1. A coin, comprising:
a metallic core having external surfaces;
a first electroplated layer adhered to and encasing the external surfaces of the metallic core, the first electroplated layer of from 4 µm to 25 µm in thickness and comprising from 60% by weight of copper to 100% by weight of copper; and
a second electroplated later of white bronze adhered to and encasing the first electroplated layer, the second electroplated layer of from 4 µm to 25 µm in thickness and consisting of from 70% by weight of copper and 30% by weight of tin to 10% by weight of copper and 90% by weight of tin.

2. The coin of claim 1, wherein the metallic core comprises one of a group of zinc or zinc alloy.

3. The coin of claim 1, wherein the metallic core comprises one of a group of nickel or nickel alloy.

4. The coin of claim 1, wherein the metallic core comprises one of a group of iron or iron alloy.

5. The coin of claim 1, wherein the metallic core comprises one of a group of copper or copper alloy.

6. The coin of claim 1, wherein the metallic core comprises one of a group of aluminium of aluminium alloy.

7. The coin of any preceding claim, wherein the metallic core comprises a plate.

8. The coin of claim 7, wherein the plate thickness is from about 500 µm to about 4,000 µm.

## Patentansprüche

1. Münze, umfassend:
einen metallischen Kern, der äußere Flächen aufweist;
eine erste galvanische Schicht, die an den äußeren Flächen des metallischen Kerns haftet und diese ummantelt, wobei die erste galvanische Schicht eine Dicke von 4 µm bis 25 µm aufweist und von 60 Gew.-% Kupfer bis 100 Gew.-% Kupfer beinhaltet; und
eine zweite galvanische Schicht aus weißer Bronze, die an der ersten galvanischen Schicht haftet und diese ummantelt, wobei die zweite galvanische Schicht eine Dicke von 4 µm bis 25 µm aufweist und aus von 70 Gew.-% Kupfer und 30 Gew.-% Zinn bis hin zu 10 Gew.-% Kupfer und 90 Gew.-% Zinn besteht.

2. Münze nach Anspruch 1, wobei der metallische Kern Zink oder eine Zinklegierung beinhaltet.

3. Münze nach Anspruch 1, wobei der metallische Kern Nickel oder eine Nickellegierung beinhaltet.

4. Münze nach Anspruch 1, wobei der metallische Kern Eisen oder eine Eisenlegierung beinhaltet.

5. Münze nach Anspruch 1, wobei der metallische Kern Kupfer oder eine Kupferlegierung beinhaltet.

6. Münze nach Anspruch 1, wobei der metallische Kern Alumimium oder eine Aluminiumlegierung beinhaltet.

7. Münze nach einem der vorhergehenden Ansprüche, wobei der metallische Kern eine Platte beinhaltet.

8. Münze nach Anspruch 7, wobei die Platte eine Dicke von etwa 500 µm bis etwa 4.000 µm aufweist.

## Revendications

1. Pièce de monnaie, comprenant:
un noyau métallique comportant des surfaces externes;
une première couche galvanisée adhérant à et renfermant les surfaces externes du noyau métallique, la première couche galvanisée ayant une épaisseur de 4 µm à 25 µm et comprenant de 60% en poids à 100 % en poids de cuivre; et
une deuxième couche galvanisée de bronze blanc adhérant à et renfermant la première couche galvanisée, la deuxième couche galvanisée ayant une épaisseur de 4 µm à 25 µm et étant constituée de 70 % en poids de cuivre et 30 % en poids d'étain à 10 % en poids de cuivre et 90 % en poids d'étain.

2. Pièce de monnaie selon la revendication 1, dans laquelle le noyau métallique comprend du zinc ou un alliage de zinc.

3. Pièce de monnaie selon la revendication 1, dans laquelle le noyau métallique comprend du nickel ou un alliage de nickel.

4. Pièce de monnaie selon la revendication 1, dans laquelle le noyau métallique comprend du fer ou un alliage de fer.

5. Pièce de monnaie selon la revendication 1, dans laquelle le noyau métallique comprend du cuivre ou un alliage de cuivre.

6. Pièce de monnaie selon la revendication 1, dans laquelle le noyau métallique comprend de l'aluminium ou un alliage d'aluminium.

7. Pièce de monnaie selon l'une quelconque des revendications précédentes, dans laquelle le noyau métallique comprend une plaque.

8. Pièce de monnaie selon la revendication 7, dans laquelle la plaque a une épaisseur d'environ 500 µm à environ 4.000 µm.
